# EUROPÄISCHE PATENTSCHRIFT

(11) **EP 0 832 489 B1**
(45) Veröffentlichungstag und Bekanntmachung des Hinweises auf die Patenterteilung: **16.12.1998**
(21) Anmeldenummer: 96914059.9
(22) Anmeldetag: 09.05.1996
(51) Int. Cl.: G21F 9/06, G21F 9/12

(54) **VERFAHREN UND VORRICHTUNG ZUR SEPARATION EINES MEDIUMS IN EINEN FESTSTOFFHALTIGEN UND IN EINEN FLÜSSIGEN BESTANDTEIL**
PROCESS AND DEVICE FOR SEPARATING A MEDIUM INTO A SOLID MATTER-CONTAINING COMPONENT AND A LIQUID COMPONENT
PROCEDE ET DISPOSITIF DE SEPARATION D'UNE SUBSTANCE EN UN COMPOSANT CONTENANT DES MATIERES SOLIDES ET EN UN COMPOSANT LIQUIDE

(30) Priorität: 22.05.1995 DE 19518701
(43) Veröffentlichungstag der Anmeldung: 01.04.1998
(73) Patentinhaber: SIEMENS AKTIENGESELLSCHAFT, 80333 München (DE)
(72) Erfinder: KLEINSCHROTH, Karl-Heinz, D-60528 Frankfurt (DE); LISSON, Johann, D-64291 Darmstadt (DE); BLINN, Klaus, D-63322 Rödermark (DE); SOWKA, Josef, D-30457 Hannover (DE)
(86) Internationale Anmeldenummer: DE9600803
(87) Internationale Veröffentlichungsnummer: WO9637897

(56) Entgegenhaltungen:
- DE-A- 2 618 232
- US-A- 4 773 997
- DATABASE WPI Week 8608 Derwent Publications Ltd., London, GB; AN 86-052986 XP002010653 & JP,A,61 007 500 (JGC CORP) , 14.Januar 1986
- DATABASE WPI Week 9518 Derwent Publications Ltd., London, GB; AN 95-133883 XP002010654 & JP,A,07 055 996 (TOSHIBA) , 3.März 1995

## Beschreibung

Die Erfindung betrifft ein Verfahren zur Separation eines Mediums in einen feststoffhaltigen und in einen flüssigen Bestandteil, insbesondere zum Entwässern und Trocknen von Abfallschlamm aus kerntechnischen Anlagen, bei dem der flüssige Bestandteil einen Filter durchströmt. Sie betrifft weiter eine Vorrichtung zur Durchführung des Verfahrens.

In Kernkraftanlagen fallen verschiedene Arten feststoffhaltigen, radioaktiven Abfallschlamms, wie beispielsweise Kugel- oder Pulverharzschlamm oder Läppmittelsuspensionen, an. Um eine sachgerechte Zwischen- oder Endlagerung zu gewährleisten, muß derartiger Abfallschlamm vor einer Weiterbehandlung, beispielsweise vor Einbinden in Bitumen oder Hochdruckverpressen, zunächst entwässert und getrocknet werden. Durch die der Trocknung vorangehende Entwässerung, bei der Kapillar- und/oder Zwickelwasser abgeschieden und einem Abwassersystem zugeführt wird, ist ein hoher Materialdurchsatz mit geringem Energieaufwand und somit eine effektive Behandlung des Abfalls erreichbar.

Für einen derartigen Entwässerungsvorgang werden üblicherweise Nutschenfilter eingesetzt. Dabei wird das zu entwassernde Medium in einem Behälter, in dessen Bodenbereich ein Filterelement angeordnet ist, mit Überdruck beaufschlagt. Dadurch wird der flüssige Bestandteil des Mediums, z.B. das Zwickelwasser, durch das Filterelement hindurchgedrückt. Der feststoffhaltige Bestandteil des Mediums wird vom Filterelement zurückgehalten. Dieser feststoffhaltige Filterrückstand wird dann üblicherweise einem Trocknungsschritt zugeführt.

Das Filterelement eines derartigen Nutschenfilters verstopft jedoch schnell und muß bereits nach kurzer Betriebszeit gereinigt oder ausgetauscht werden.

Der Erfindung liegt daher die Aufgabe zugrunde, ein Verfahren zur Separation eines Mediums in einen feststoffhaltigen und in einen flüssigen Bestandteil derart anzugeben, daß eine Verstopfung des Filters auch bei geringem Reinigungs- oder Wartungsaufwand vermieden ist. Dies soll mit einer besonders geeigneten Vorrichtung erreicht werden.

Bezüglich des Verfahrens wird diese Aufgabe erfindungsgemäß gelost, indem der Filter zum Abstreifen von Filterrückstand gegenüber dem Medium mindestens annähernd senkrecht zur Durchströmungsrichtung bewegt wird, und indem das Medium gerührt wird.

Die Erfindung geht dabei von der Beobachtung aus, daß bei einer Verstopfung eines Filters zunächst einige im Medium enthaltene Feststoffpartikel am Filter anhaften. Diese verklumpen dann mit weiteren Feststoffpartikeln in ihrer Umgebung. Dieser Vorgang kann sich bis zu einer vollständigen Verstopfung des Filters fortsetzen. Eine Verstopfung des Filters kann also durch eine Unterdrückung des Anhaftens von Feststoffpartikeln am Filter vermieden oder erschwert werden. Zur Unterdrückung des Anhaftens von Feststoffpartikeln am Filter hat sich eine Relativbewegung zwischen Filter und zu separierendem Medium annähernd senkrecht zur Durchströmungsrichtung als besonders effektiv erwiesen.

Um die Separation von flüssigen und feststoffhaltigen Bestandteilen des Mediums weiter zu unterstützen, wird dieses zusätzlich gerührt. Dadurch ist zudem ein Wärmetransport innerhalb des Mediums begünstigt, so daß eine Beheizung des Mediums zur Unterstützung einer Entwässerung oder Trocknung erleichtert ist.

Zweckmäßigerweise wird das zu separierende Medium beheizt, um den Entwässerungsvorgang zu unterstützen oder um den Trocknungsvorgang zu beschleunigen.

Um die Behandlung eines radioaktiven Mediums in besonderer Weise zu erleichtern, kann das Medium nach einem ersten Entwässerungs- oder Trocknungsschritt durch Zuführung von nicht-radioaktivem Wasser gespült werden, bevor es einem zweiten Entwässerungs- oder Trocknungsschritt unterzogen wird.

Bezüglich der Vorrichtung wird die genannte Aufgabe erfindungsgemäß gelöst, indem ein in einem Behälter vorgesehenes zylinderförmiges Filterelement rotierbar angeordnet ist, und indem an einem innerhalb des Behälters vorgesehenen rotierbaren Schwenkarm ein Durchmischungsorgan angeordnet ist, das bei einer Rotation des Schwenkarms an der Innenoberfläche des Behälters entlang führbar ist.

Während eines Entwässerungs- und Trocknungsvorgangs rotiert das Filterelement um seine Zylinderachse,so daß eine Bewegung des Filterelements gegenüber dem Medium in eine Richtung annähernd senkrecht zur Durchströmungsrichtung erreicht ist. Ein Anhaften von im Medium enthaltenen Feststoffpartikeln am Filterelement ist dadurch unterdrückt, so daß eine Verstopfung des Filterelements nahezu ausgeschlossen ist.

Mittels des Durchmischungsorgans ist eine Umwälzung und somit eine Durchmischung des Mediums möglich, so daß die Separation des Mediums in einen feststoffhaltigen und in einen flüssigen Bestandteil und auch ein Wärmetransport innerhalb des Mediums begünstigt sind. Durch das Entlangführen des Durchmischungsorgans entlang der Innenoberfläche des Behälters ist zudem ein Anhaften von im Medium enthaltenen Feststoffpartikeln an der Behälterwand, das beispielsweise im Falle eines radioaktiven Mediums zu einer zusätzlichen Kontamination des Behälters führen könnte, vermieden.

Um eine Beheizung von im Behälter befindlichem Medium zu ermöglichen, ist der Behälter vorteilhafterweise doppelwandig ausgeführt, wobei an die Behälterdoppelwand eine Heißdampfzuleitung angeschlossen ist. An dem Behälter kann außerdem eine Zuleitung und/oder eine Ableitung für Druckluft angeordnet sein.

In weiterer vorteilhafter Ausgestaltung weist das Filterelement ein Metallgewebe auf. Derartige Metallgewebefilter haben sich als besonders effektiv für die Entwässerung von radioaktivem Abfallschlamm erwiesen.

Um die Abführung des separierten flüssigen Bestandteils des Mediums auch bei geringen Füllmengen des Behälters zu gewährleisten, ist vorteilhafterweise innerhalb des Filterelements ein bis nahezu an den Boden des Filterelements reichendes Filtratauslaufrohr angeordnet. Durch das Filtratauslaufrohr werden zudem Luftdurchbrüche in die Filtratableitung bei einer Beaufschlagung des Behälters mit Überdruck vermieden.

Die mit der Erfindung erzielten Vorteile bestehen insbesondere darin, daß durch eine Bewegung des Filters gegenüber dem Medium mindestens annähernd senkrecht zur Durchströmungsrichtung bei einer Separation eines Mediums in einen feststoffhaltigen und in einen flüssigen Bestandteil, insbesondere bei einer Entwässerung und einer Trocknung von Abfallschlamm aus kerntechnischen Anlagen, bei der der flüssige Bestandteil einen Filter durchströmt, eine Verstopfung des Filters auch bei geringem Reinigungs- oder Wartungsaufwand vermieden ist.

Ein Ausführungsbeispiel der Erfindung wird anhand einer Zeichnung näher erläutert.

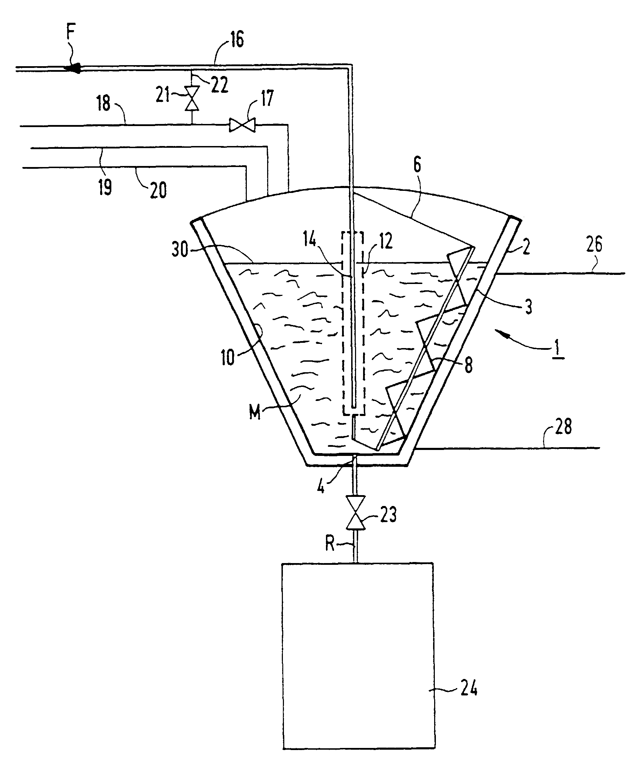

Die Figur zeigt eine Vorrichtung zur Separation eines Mediums in einen feststoffhaltigen und in einen flüssigen Bestandteil. Die Separationsvorrichtung 1 umfaßt einen Behälter 2, der in einem Bereich 3 konisch ausgeführt und doppelwandig aufgebaut ist. Die konische Ausführung des Behälters 2 begünstigt ein vollständiges Entleeren des Behälters 2 durch eine verengte, mit einem Deckel oder einer Armatur verschließbare Ablaßöffnung 4. Innerhalb des Behälters 2 ist ein um die Mittelachse des Konus rotierbarer Schwenkarm 6 angeordnet, an dessen Ende ein seinerseits rotierbarer Rührer 8 als Durchmischungsorgan vorgesehen ist. Der Rührer 8 ist derart angeordnet, daß er bei einer Rotation des Schwenkarms 6 an der konischen Innenoberfläche 10 des Behälters 2 entlangstreift.

Innerhalb des Behälters 2 ist koaxial zur Konusachse ein zylinderförmiges Filterelement 12 um seine Zylinderachse rotierbar angeordnet. Das Filterelement 12 weist dabei ein Metallgewebe auf. In der Zylinderachse des Filterelements 12 ist ein Filtratauslaufrohr 14 angeordnet, das außerhalb des Behälters 2 mit einer Filtratableitung 16 verbunden ist. Das Filtratauslaufrohr 14 reicht nahezu bis an den Boden des Filterelements 12.

An dem Behälter 2 sind eine mit einem Ventil absperrbare Druckluftzuleitung 18 und eine Wasserzuleitung 19 sowie eine Materialzuleitung 20 angeschlossen. Um ein Rückspülen und/oder Ausblasen des Filterelements 12 zu ermöglichen, ist die Druckluftleitung 18 über eine mit einem Ventil 21 absperrbare Leitung 22 mit der Filtratableitung 16 verbunden.

Unterhalb der mit einem Ventil 23 absperrbaren Ablaßöffnung 4 des Behälters 2 ist ein stationärer oder verfahrbarer Behälter 24 vorgesehen. Um einen Filtervorgang zu unterstützen, können sowohl das Ventil 23 als auch der untere Teil des konischen Bereichs 3 als Filter ausgebildet sein. An den doppelwandig ausgebildeten konischen Bereich 3 des Behälters 2 sind eine Heißdampfzuleitung 26 und eine Ableitung 28 angeschlossen.

Beim Betrieb der Separationsvorrichtung 1 ist der Behälter 2 bis zu einem Pegel 30 mit einem Medium M, z.B. Abfallschlamm einer Kernkraftanlage, angefüllt, das durch die Zuführungsleitung 20 zuführbar und in einen flüssigen und in einen feststoffhaltigen Bestandteil zu separieren ist. Zur Separation des flüssigen Bestandteils von dem festen Bestandteil des Mediums M wird der Behälter 2 mittels der Druckluftzuleitung 18 mit Überdruck beaufschlagt. Dadurch wird der flüssige Bestandteil des Mediums M durch den Filter 12 gepreßt und gelangt somit als Filtrat F in den Innenraum des Filterelements 12. Von dort wird das Filtrat F aufgrund der Druckverhältnisse über das Filtratauslaufrohr 14 der Filtratableitung 16 und über diese einem (nicht dargestellten) Abscheidebehälter zugeführt. Somit wird der feststoffhaltige Bestandteil des Mediums M im Behälter 2 angereichert, so daß das Medium M entwässert wird. Das Filtratauslaufrohr 14 reicht dazu nahezu bis an den Boden des Filterelements 12, so daß auch bei einem niedrigen Pegel 30 ein Luftdurchbruch von dem mit Überdruck beaufschlagten Behälter 2 in die Filtratableitung vermieden ist. Um eine Verstopfung des Filterelements 12 durch im Medium M enthaltene Feststoffpartikel zu vermeiden, rotiert das Filterelement 12 um seine Zylinderachse. Mit anderen Worten: das Filterelement 12 wird somit gegenüber dem Medium M senkrecht zur Durchströmungsrichtung bewegt.

Dem doppelwandigen konischen Bereich des Behälters 2 wird über die Heißdampfzuleitung 26 heißer Dampf zugeführt, so daß das Medium M beheizt wird. Eine derartige Beheizung des Mediums M unterstützt die Separation des flüssigen Bestandteils vom Medium M und somit die Entwässerung und auch eine Trocknung des feststoffhaltigen Bestandteils des Mediums M. Gemeinsam mit dem Filterelement 12 rotiert der Schwenkarm 6, an dem der ebenfalls rotierende Rührer 8 angeordnet ist. Durch die somit erreichte kontinuierliche Durchmischung des Mediums M im Behälter 2 wird die Separation des Mediums M in einen feststoffhaltigen und in einen flüssigen Bestandteil begünstigt. Dadurch ist zudem ein Wärmetransport innerhalb des Mediums M unterstützt, so daß die Beheizung des Mediums M erleichtert ist. Der an der Innenwand 10 des Behälters 2 entlanggeführte Rührer 8 verhindert zudem ein Anhaften von Feststoffpartikeln des Mediums M an der Behälterinnenwand 10 und somit eine Kontamination des Behälters 2 bei der Behandlung radioaktiver Stoffe.

Nach erfolgter Entwässerung und Trocknung des feststoffhaltigen Bestandteils des Mediums M wird der verbliebene Rückstand R durch Öffnen des Ablaßventils 22 dem Behälter 24 zugeführt. Das Innere des Filterelements 12 kann zusätzlich mittels der mit der Filterableitung 16 verbundenen Druckluftzuleitung unter Überdruck gesetzt werden, so daß ein rückwärtiges Ausblasen des Filterelements 12 ermöglicht ist.

Bei der Behandlung eines radioaktiven Mediums M kann dieses nach einem ersten Entwässerungsschritt durch Zuführen von Wasser W durch die Wasserzuleitung 19 zunächst gespült werden. Dadurch wird ein Verdünnungseffekt erzielt.

Die Separationsvorrichtung 1 bietet den zusätzlichen Vorteil einer kompakten Bauweise und ermöglicht die Durchführung der verschiedenen Behandlungsprozesse wie Entwässerung, Spülen oder Trocknung innerhalb eines einzigen Behälters 2. Dies ist insbesondere bei der Behandlung von radioaktivem Abfallschlamm vorteilhaft. Durch die Rotation des Filterelements 12 und des am rotierenden Schwenkarm 6 angeordneten Rührers 8 ist ein effektiver Separationsvorgang gewährleistet, wobei eine Verstopfung des Filterelements 12 auch bei geringem Reinigungs- oder Wartungsaufwand vermieden ist.

## Patentansprüche

1. Verfahren zur Separation eines Mediums (M) in einen feststoffhaltigen und in einen flüssigen Bestandteil, insbesondere zum Entwässern und Trocknen von Abfallschlamm aus kerntechnischen Anlagen, bei dem der flüssige Bestandteil einen Filter durchströmt, wobei der Filter zum Abstreifen von Filterrückstand gegenüber dem Medium (M) mindestens annähernd senkrecht zur Durchströmungsrichtung bewegt wird, und wobei das Medium (M) gerührt wird.

2. Verfahren nach Anspruch 1,
**dadurch gekennzeichnet**, daß das Medium (M) beheizt wird.

3. Verfahren nach Anspruch 1 oder 2,
**dadurch gekennzeichnet**, daß das Medium (M) nach einem ersten Entwässerungs- oder Trocknungsschritt gespült wird.

4. Vorrichtung zur Separation eines Mediums (M) in einen feststoffhaltigen und in einen flüssigen Bestandteil, insbesondere zur Durchführung des Verfahrens nach einem der Ansprüche 1 bis 3, mit einem in einem Behälter (2) vorgesehenen, rotierbar angeordneten zylinderförmigen Filterelement (12), und mit einem an einem innerhalb des Behälters (2) vorgesehenen rotierbaren Schwenkarm (6) angeordneten Durchmischungsorgan(8), das bei einer Rotation des Schwenkarmes (6) an der Innenoberfläche (10) des Behälters (2) entlangführbar ist.

5. Vorrichtung nach Anspruch 4,
**dadurch gekennzeichnet**, daß der Behälter (2) doppelwandig ausgebildet ist.

6. Vorrichtung nach Anspruch 4 oder 5,
**dadurch gekennzeichnet**, daß das Filterelement (12) ein Metallgewebe aufweist.

7. Vorrichtung nach einem der Ansprüche 4 bis 6,
**gekennzeichnet durch** ein innerhalb des Filterelements (12) angeordnetes Filtratauslaufrohr (14).

8. Vorrichtung nach einem der Ansprüche 4 bis 7,
**dadurch gekennzeichnet**, daß an dem Behälter (2) eine Zuleitung (18) und/oder eine Ableitung (16) für Druckluft angeordnet ist.

9. Vorrichtung nach einem der Ansprüche 4 bis 8,
**dadurch gekennzeichnet**, daß am Behälter 2 eine Heißdampfzuführungsleitung (26) angeordnet ist.

## Claims

1. Method for separating a medium (M) into a solids-containing component and a liquid component, in particular for the dewatering and drying of waste sludge from nuclear plants, in which the liquid component flows through a filter, wherein, for the purpose of stripping off filter residue, the filter is moved in relation to the medium (M) in a direction that is at least substantially perpendicular to the throughflow direction, and wherein the medium (M) is agitated.

2. Method according to claim 1, characterised in that the medium (M) is heated.

3. Method according to claim 1 or 2, characterised in that the medium (M) is scavenged after a first dewatering or drying step.

4. Apparatus for separating a medium (M) into a solids-containing component and a liquid component, in particular for carrying out the method according to one of claims 1 to 3, having a rotatably arranged cylindrical filter element (12), which is provided in a vessel (2), and having an intermixing member (8) which is arranged on a rotatable pivoting arm (6) provided within the vessel (2) and which can be guided along the inner surface (10) of the vessel (2) when the pivoting arm (6) rotates.

5. Apparatus according to claim 4, characterised in that the vessel (2) has a double-walled design.

6. Apparatus according to claim 4 or 5, characterised in that the filter element (12) has a metal gauze.

7. Apparatus according to one of claims 4 to 6, characterised by a filtrate outflow pipe (14) which is arranged within the filter element (12).

8. Apparatus according to one of claims 4 to 7, characterised in that a feed line (18) and/or a discharge line (16) for compressed air are/is arranged on the vessel (2).

9. Apparatus according to one of claims 4 to 8, characterised in that a hot steam feed line (26) is arranged on the vessel (2).

## Revendications

1. Procédé de séparation d'un milieu (M) en un constituant contenant des matières solides et en un constituant liquide, notamment pour la déshydratation et le séchage de boues résiduaires d'installations de génie nucléaire, dans lequel le constituant liquide passe dans un filtre, le filtre étant, pour l'enlèvement du résidu de filtre, déplacé par rapport au milieu (M) au moins à peu prés perpendiculairement à la direction de passage du constituant liquide dans le filtre et le milieu (M) étant brassé.

2. Procédé suivant la revendication 1,
caractérisé en ce que le milieu (M) est chauffé.

3. Procédé suivant la revendication 1 ou 2,
caractérisé en ce que le milieu (M) est lavé après un premier stade de déshydratation ou de séchage.

4. Dispositif de séparation d'un milieu (M) en un constituant contenant des matières solides et en un constituant liquide, notamment pour la mise en oeuvre du procédé suivant l'une des revendications 1 à 3, comprenant un élément (12) filtrant de forme cylindrique monté tournant et prévu dans une cuve (2) et un organe (8) de mélange monté sur un bras (6) pivotant qui est prévu à l'intérieur de la cuve (2) et qui peut tourner, l'organe (8) pouvant, lors d'une rotation du bras (6) pivotant, passer le long de la surface (10) intérieure de la cuve (2).

5. Dispositif suivant la revendication 4,
caractérisé en ce que la cuve (2) est à double paroi.

6. Dispositif suivant la revendication 4 ou 5,
caractérisé en ce que l'élément (12) filtrant est une toile métallique.

7. Dispositif suivant l'une des revendications 4 à 6,
caractérisé par un tuyau (14) d'évacuation du filtrat disposé à l'intérieur de l'élément (12) filtrant.

8. Dispositif suivant l'une des revendications 4 à 7,
caractérisé en ce qu'il est prévu sur la cuve (2) un conduit (18) d'amenée et/ou un conduit (16) de sortie d'air comprimé.

9. Dispositif suivant l'une des revendications 4 à 8,
caractérisé en ce qu'il est prévu sur la cuve (2) un conduit (26) d'amenée de vapeur chaude.
